Europäisches Patentamt

European Patent Office

Office européen des brevets

(11) Publication number: **0 061 506**
**B1**

(12) **EUROPEAN PATENT SPECIFICATION**

(45) Date of publication of patent specification: **18.07.84**

(51) Int. Cl.³: **F 23 J 1/00, B 65 G 53/30**

(21) Application number: **81102290.4**

(22) Date of filing: **26.03.81**

(54) **A method of hydraulic transport of power-industry slags and other solid waste materials.**

(43) Date of publication of application:
**06.10.82 Bulletin 82/40**

(45) Publication of the grant of the patent:
**18.07.84 Bulletin 84/29**

(84) Designated Contracting States:
**AT BE CH DE FR GB IT LI LU NL SE**

(56) References cited:
**AT - B - 106 781**
**DE - A - 2 634 807**

(73) Proprietor: **Zaklady Energetyczne Okregu Poludniowego**
**ul Jordana 25**
**Katowice (PL)**

(72) Inventor: **Kmiecik, Jerzy**
**ul. Chrobrego 13/21**
**Katowice (PL)**
Inventor: **Rokita, Jerzy**
**ul. Kosciuszki 16/5**
**Gliwice (PL)**
Inventor: **Szubra, Jan**
**ul. Broniewskiego 15/5**
**Katowice (PL)**
Inventor: **Tomaszewski, Slawomir**
**ul. Uniwersytecka 29/32**
**Katowice (PL)**
Inventor: **Wilgusiewicz, Wladyslaw**
**ul. Swierczewskiego 67**
**Zabrze (PL)**
Inventor: **Zarzycki, Maciej**
**ul. Karolinki 15**
**Gliwice (PL)**

(74) Representative: **Hansen, Bernd, Dr.rer.nat. et al,**
**Hoffmann, Eitle & Partner Patentanwälte**
**Arabellastrasse 4**
**D-8000 München 81 (DE)**

Courier Press, Leamington Spa, England.

## Description

The subject of the invention is a method of hydraulic transport of power-industry slags and other solid waste materials from power plants, thermal-electric power stations and heating plants to the point of their receiving or storage, whereby transport is performed by forcing slags and other waste materials through pipelines under pressure produced by a pump.

The known and presently applied methods of transporting power-industry slags and other solid waste materials from power plants, thermal-electric power stations and heating plants consist in utilization of belt conveyors, road or rail transport, or hydraulic transport in pipelines. They are described in technical literature, e.g. in publications by Risse R. "Betriebserfahrungen mit verschiedenen Entaschungsanlagen", Mitteilungen VGB, 1966, pp. 22—28; Risse F., "Hydraulische Entaschung", Mitteilungen VGB, 1970, pp. 386—394; Buchmüller H.A. "Betriebssicherer Feuerraum" — Entaschung mit Braunkohle — Dampferzeugern Energie, Mai 1976. In the case of hydraulic transport of slags and waste materials the installation is usually designed so that falling out dry fly-ashes are washed down in washing apparatuses of various types, causing the density of the mixture of water with ash to be low because of very large water excesses. After adding slags and other waste materials to said mixture they are transported by pipelines, and the flow of the mixture is forced by pumps.

Percentages by weight of slag in the mixture is inconsiderable in practice and usually does not exceed ten percent. Flow velocities of the mixture in pipelines must be selected so that slag particles do not settle on the bottom of the pipeline. The said method of hydraulic transporting of slags and other solid waste materials is characterized by high energy-consumption and a considerable amount of water per mass unit of transported slags and waste materials.

The object of the invention is to design a new method of transporting power-industry slags and other solid waste materials from power plants, thermal-electric power stations and heating plants, which is characterized by essentially advantages in comparision with those hitherto discussed and applied.

The task of the invention is to decrease energy consumption and to reduce water consumption per mass of unit of slags and waste materials being transported hydraulically. The said task has been attained in such a manner that power-industry slags and other solid waste materials are transported in pipelines, and the carrying agent being applied is a heavy liquid which is a dense suspension of dry fly-ashes in water, of a volumetric composition in proportion of from one to six parts of water per one part of dry fly-ashes. To this heavy liquid power-industry slags and other solid waste materials must be added at a volumetric proportion of up to 0.2 parts of slags and waste materials per one part of the heavy liquid. This mixture of slags and waste materials with a heavy liquid flows through pipelines, the flow being forced by a pump.

A system of devices for carrying out the method of hydraulic transport of power-industry slags and other solid waste materials from power plants, thermal-electric power stations and heating plants must include a separate set of devices, wherein a heavy liquid is produced, which is a suspension of dry fly-ashes in water, and a main mixer wherein proportioned power-industry slags and other solid waste materials are mixed with the heavy liquid and maintained in a suspension state, as well as a pump to which the mixture of slags and waste materials in the heavy liquid flows by gravitation, and which causes said mixture to be forced through pipelines to the place of destination.

An advance of the method of transporting power-industry slags and other solid waste materials according to the invention consists in that off-taking of ashes, slags and other waste materials takes place simultaneously with considerably reduced energy consumption and considerably reduced water consumption per mass unit of the solid phase. Since slags and other solid waste materials are transported through pipelines in a stream of a heavy liquid of a density being several ten percent higher than the density of water, it is possible to apply reduced flow velocities of the liquid without the effect that solid body grains settle on the bottom of the pipeline.

The application of the invention renders it possible to reduce costs resulting from electric energy consumption and reduction of water consumption.

The method of transporting power-industry slags and other solid waste materials from power plants, thermal-electric power stations and heating plants, according to the invention, can be applied in power plants, thermal-electric power stations and heating plants whose pulverized fuel boilers are fired with hard or brown coal.

## Claim

A method of hydraulic transport of power-industry slags and other solid waste materials from power plants, thermal-electric power stations and heating plants in pipelines under pressure produced by a pump, characterized in that power-industry slags or other solid waste materials are transported in a heavy liquid being a suspension of dry fly-ashes in water at a volumetric proportion of from 1 to 6 parts of water per one part of dry fly-ashes, and the volumetric composition of slags and waste materials in the heavy liquid being of up to 0.2 parts of slags and waste materials per one part of the heavy liquid, whereby mixing of slags and other solid waste materials with the heavy liquid takes place after previous production of the heavy liquid.

## Revendication

Procédé pour le transport hydraulique de scories provenant de la combustion de charbon et d'autres résidus solides d'installations productrices d'énergie, centrales thermoélectriques et installations de chauffage à travers des pipelines sous l'effet de la pression produite par une pompe, caractérisé en ce que les scories et autres résidus solides sont transportés à travers les pipelines dans un liquide lourd qui est une suspension de cendres volantes sèches dans l'eau ayant une composition volumétrique de 1 à 6 parties d'eau pour 1 partie de cendres volantes sèches, la fraction volumétrique de scories et autres résidus solides dans le liquide lourd pouvant représenter jusqu'à 0,2 partie de scories et d'autres résidus solides pour 1 partie de liquide lourd, le mélange des scories et autres résidus solides avec le liquide lourd s'effectuant après la production du liquide lourd.

## Patentanspruch

Verfahren zum hydraulischen Transport von Schlacken und anderen festen Abfallstoffen, die bei der Energieerzeugung in Wärme/Strom-Kraftwerken und Heizanlagen entstehen, wobei der Transport in Rohrleitungen unter von mit Pumpen erzeugtem Druck erfolgt, dadurch gekennzeichnet, dass die in den Kraft- und Heizwerken erzeugten Schlacken und andere feste Abfallstoffe in einer schweren Flüssigkeit transportiert werden, wobei letztere eine Suspension trockener Flugasche in Wasser in einem volumetrischen Anteil von 1 bis 6 Teilen Wasser pro Teil trockener Flugasche darstellt, und die volumetrische Zusammensetzung der Schlacken und Abfallstoffe in der schweren Flüssigkeit bis zu 0,2 Teile Schlacke und Abfallstoffe pro Teil der schweren Flüssigkeit umfasst, und das Vermischen der Schlacken und anderen festen Abfallstoffe mit der schweren Flüssigkeit nach vorhergehender Herstellung der schweren Flüssigkeit erfolgt.